# EUROPEAN PATENT APPLICATION

(11) **EP 3 301 788 A1**
(43) Date of publication of application: **04.04.2018**
(21) Application number: 17192770.0
(22) Date of filing: 22.09.2017
(51) Int. Cl.: H02K 3/18, H02K 15/04, H02K 9/22

(54) **SALIENT POLE COILS FOR ELECTRIC MACHINES**

(30) Priority: 30.09.2016 GB 201616621
(71) Applicant: Nidec SR Drives Ltd., Harrogate North Yorkshire HG3 1PR (GB)
(72) Inventor: DICKINSON, Phillip George, Harrogate, Yorkshire HG3 2NX (GB)
(74) Representative: Korenberg, Alexander Tal

(57) **Abstract**

A coil for an electrical machine having a stator with salient poles is disclosed. The coil has first and second coil sides joined by a respective coil end at each end to define a space for accepting a salient pole. Each coil side has an inner side facing the space and an opposed outer side. The coil comprises a plurality of turns of a conductor arranged in layers of turns with a first layer disposed on the inner side of the first coil side and the outer side of the second coil side and a second layer disposed on the inner side of the second coil side and the outer side of the first coil side. The arrangement of the layers of the turns of the conductor provides a thermal conduction path for the conductor with reduced thermal impedance, which facilitates transfer of heat into the stator from portions of the conductor oriented away from the stator surface, providing more efficient removal of heat loss and a more uniform heat distribution in the coil.

## Description

This invention relates to coils used to create windings in electrical machines, particularly although not exclusively those machines in which adjacent coils do not overlap.

Electrical machines make use of flux flowing in a magnetic circuit to convert energy from one form to another. A transformer can be used to convert energy from one voltage level to another. Rotating electrical machines convert electrical energy to mechanical energy when acting as a motor, and mechanical energy to electrical energy when acting as a generator. All of these machines require electrical windings which carry either excitation or load current. These windings are typically composed of one or more coils of conducting wire (e.g. copper or aluminium) which is coated with insulating enamel to provide electrical insulation between adjacent turns of the coil.

Because of the wide variety of machines in existence, many different types of windings are required and different techniques are required for the satisfactory manufacture of the differing shapes of coils. For relatively small machines, round wire is normally used and, because production volumes are often high, automated methods are known for producing the required coils. Typically these coils have large numbers of turns, e.g. 100 turns or more, and the wire is relatively fine, e.g., less than 0.5mm in diameter, so the coils are "random" or "mush" wound, i.e. the position of any one turn is not defined within the coil. Sometimes these coils are wound directly into the machine, i.e. "in situ" winding.

The required profile of the coil is very dependent on the type of electrical machine and the required performance. In machines which employ a rotating wave of magnetomotive force (mmf), a "distributed" winding is typically employed, in which each coil spans several slots in the stator and therefore overlaps one or more adjacent coils. Such coils and their methods of production are discussed in many textbooks, e.g. "The Performance and Design of Alternating Current Machines", M G Say, Third Edition published by Pitman in 1958.

In other types of machines, a coil only spans a single tooth or pole. These machines typically have salient stator poles with parallel sides so it is conventional to wind the coils on a former and subsequently mount the coil on the pole with a suitable insulation system between the pole and the coil. Such coils are found, for example, in the field windings of DC machines and in switched reluctance machines. The coils for these machines are typically characterised by having a "narrow" profile, i.e. the width of the coil at right angles to the pole on which it is assembled is a fraction of the overall axial length of the coil, typically having a ratio of the width to length of 0.1 to 0.6.

In some cases, rather than forming the windings from an individual copper wire and winding it to form coils, a bundle of wires are braided or twisted together before the bundle is used to form the turns of the coils. These twisted conductors are often referred to as "rope" conductors and the braided ones as Litz wire.

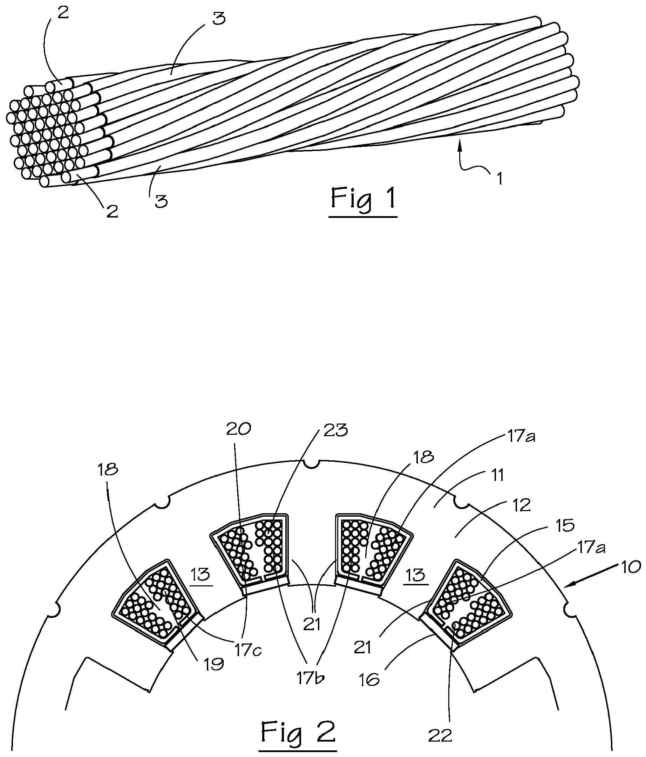

Figure 1 schematically illustrates a portion of a rope conductor 1 of the prior art used to form a coil winding for use in an electrical machine. The conductor 1 comprises a bundle of copper wires 2, with each copper wire 2 having an outer layer of insulating material 3. The individual wires 2 are twisted to form the conductor 1. Thus, for a given cross-sectional area, the rope conductor comprises many smaller wires than the more common single-strand winding. However, since the individual strands each have their own coating of insulation, the cross-sectional area of copper usually falls.

Windings formed from rope conductors reduce AC loss due to smaller eddy currents in the smaller wires, but because there is less copper in the windings, DC copper losses are increased so there is always a balance to be made between reducing AC loss while increasing DC loss.

Figure 2 shows a cross-section of a portion of a typical stator 10 for a switched reluctance machine. The stator core 11 is typically built up by stacking laminations of the desired profile. The core has a, typically annular, outer part 12, often called "the back-iron", from which stator poles 13 extend radially inwards. The stator poles 13 typically have parallel sides 21. In this specification, the term "inner stator surface" denotes that part of the profile of the stator which forms the boundary of the slots between the poles, i.e. it comprises the sides of the poles and the radially inner surface of the outer part 12 between adjacent poles.

The stator poles 13 carry coils 17a, 17b, 17c which are typically connected in diametrically opposite pairs to form phase windings. The stator coils 17a, 17b, 17c encircle the parallel sides 21 of the stator poles 13 and the axial ends of the stator poles 13. The overall shape is often referred to as a "race track" coil. The coils are wound from an electrical conductor, typically copper or aluminium. Each coil surrounding any one stator pole 13 has two coil sides 19, 20 and two coil ends (not shown in Figure 2) which join the coil sides 19, 20 together at the axial ends of the stator pole 13.

The stator coils are wound with a cross-sectional profile in which the conductor 23 is arranged in a series of stacked layers, each layer comprising a multiplicity of turns of the conductor 23. Figure 2 shows each stator coil having two full layers and one partial layer, each of the full layers comprising six turns.

The number of stator poles 13 and the number of phases of the electrical machine (and hence the number of phase windings) are parameters which the designer selects to best meet the specification for the machine. The design of such stators is known to persons skilled in the art and need not be described in any further detail herein, except as is relevant to the present invention.

The slots 18 which are formed between the stator poles 13 are lined with a suitable insulation. Commonly, a slot liner 15, made from a sheet of insulating material, is used. The coils are typically wound on a former then transferred to the stator 10 and placed over the slot liners 15. The slot liners 15 are often folded over the coil side and secured in place by closing pieces 16, sometimes known as "slot wedges" or "top sticks".

With the type of construction illustrated in Figure 2, it is usual to restrict the dimension of the coil side at right angles to the parallel sides 20, 21 of the stator pole 13 such that it does not extend into the stator slot 18 past the radial line which defines the centre of the slot. This ensures that the stator coils are able to fit into the stator 10, although it necessarily gives rise to voids in the slots being present between adjacent coil sides. While this void is good for electrical isolation between the coils, and hence between phase windings, it provides a thermal disadvantage since it does not offer a low thermal impedance to remove heat from those regions of the coils which are remote from the inner stator surface.

The dissipation of losses from the winding of an electrical machine relies on the existence of a thermal path to a coolant (e.g. air being blown past the outer surface of the coils) or to a cooler surface (e.g. the inner stator surface). In Figure 2 it will be seen that the thermal path from an outermost turn 22 to the stator core 11 is relatively long. If the machine is totally enclosed i.e. the losses are extracted through the stator core 11 and the frame (not shown), then it is common for the parts of the coil farthest from the stator core to run significantly hotter than the turns closer to the stator. Thus, unless the coils are to be directly cooled by cooling fluid being passed across the coils themselves, the losses generated in the coils must be conducted across the inner stator surface and through the core itself.

It follows that the turns of the coil which are the furthest from the inner stator surface have a relatively high thermal impedance between them and the stator core 11, since the heat has to pass across many layers of insulation (both around the wires themselves and the slot liner) before reaching the stator. As a result, the outermost corner of the coil will typically run much hotter than the rest of the coil, and this is often a limiting feature of the design. Calculations show that while the thermal conductivity of copper is 398W/mK, the thermal conductivity of the path made up from both copper wire and the necessary insulation is 0.93W/mK.

Where the coil comprises a twisted rope conductor, this difficulty is even more acute due to the larger number of individual copper wires and therefore layers of insulating material. As each individual copper strand within the twisted rope configuration is coated with insulating enamel and because there are larger numbers of air gaps between the individual wires in each bundle and between each turn of the winding, the thermal conductivity of the coils is reduced and the differential between the temperature of inner and outer turns in the coil is increased.

Aspects of the invention are set out in the independent claims. Optional features of embodiments are set out in the dependent claims.

In some embodiments, a coil for an electrical machine having a stator with salient poles is provided. The coil has first and second coil sides joined by a respective coil end at each end to define a space for accepting a salient pole. Each coil side has an inner side facing the space and an opposed outer side. The coil comprises a plurality of turns of a conductor arranged in layers of turns with a first layer disposed on the inner side of the first coil side and the outer side of the second coil side and a second layer disposed on the inner side of the second coil side and the outer side of the first coil side.

This has the advantage that heat dissipation to the stator is improved. A portion of the conductor that would, in a known coil configuration, be unable to easily dissipate heat because of the relatively high thermal impedance between the conductor and the stator core, is thermally coupled by the conductor to another portion of the conductor which is disposed in proximity to the stator surface on the other coil side, and therefore is more easily able to dissipate heat to the stator. This arrangement provides a thermal conduction path for the conductor with reduced thermal impedance, which facilitates transfer of heat into the stator from portions of the conductor disposed away from the stator surface. Thus, heat may be more efficiently removed to the stator core and the distribution of temperatures within the coil may be more uniform.

In some embodiments, an arrangement of the plurality of turns in the first side is rotated about an axis along the first coil side and relative to an arrangement of the plurality of turns in the second side. The axis may lie within the first coil side, for example coincide with the first coil side. The angle of rotation may be between 160 and 200 degrees, for example between 170 and 190 degrees, in particular 180 degrees. In some embodiments, the conductor is one or more of a wire, a bundle of wires, a twisted bundle of wires, a rope of wires or a braid of wires.

In accordance with some embodiments, there is provided an electrical machine having a stator with salient poles and one or more coils as described above.

In accordance with some embodiments, there is provided a method of forming a coil, the method comprising winding the conductor in layers on a former to form a coil having first and second coil sides joined at each end by a respective coil end, removing the coil from the former and moving the first coil side relative to the second coil side to form a coil as described above.

In some embodiments, the turns of the first and second layer of the formed coil are sequential turns on the former. The first coil side may be rotated through an angle relative to the second coil side about an axis along the first coil side. The axis may lie within the first coil side, for example coinciding with the first coil side. The angle may be between 160 and 200 degrees, for example between 170 and 190 degrees, in particular 180 degrees.

In some embodiments, the turns of the first and second layer of the formed coil are corresponding turns in the layers on the former. Seen differently, in these embodiments the profile of a transverse cross section the coil sides of the coil on the former and of the formed coil are substantially perpendicular to each other. Each coil side may be rotated through an angle relative to the other coil sider about an axis along a respective one of the coil sides. The axis may lie within the respective coil side, for example coinciding with the centre of the respective coil side. The angle may be between 80 and 100 degrees, for example between 85 and 95 degrees, in particular 90 degrees. In some embodiments, the first coil side is translated relative to the second coil side so that the coil sides face each other.

In some embodiments, a distance from the space for accepting a salient pole of each turn in each side is substantially constant over a portion of the respective coil side. The conductor may be disposed in the same position at each transverse cross section of the coil in substantially all or a portion of each coil side. Thus, subject to manufacturing tolerances, the turns in each side run substantially parallel along the space over the portion, for example over substantially all of each side, subject to manufacturing tolerances, as some deviation near the coil ends can be expected. For example, the conductor may change its position within the transverse cross section of the coil in the coil ends. In some embodiments, an average distance from the space along each turn (that is the distance of the conductor at each point in the turn averaged over the turn) is substantially constant across the plurality of turns, again subject to manufacturing tolerances as some deviations can be expected, in particular in the region of the coil ends. Advantageously, this facilitates uniformity of heat dissipation, and hence temperature, across the coil.

In some aspects there is provided a coil for an electrical machine having a stator with salient poles, the salient poles having first and second pole sides, the coil being wound from a continuous conductor and comprising one or more layers, each layer comprising a multiplicity of turns of the conductor, the coil having a first coil side, a second coil side, and first and second coil ends connecting the first and second coil sides, the first coil side having a longitudinal axis, wherein the first coil side is rotated around the longitudinal axis with respect to the second coil side such that, when placed around a salient pole of the stator, an inner layer of the second coil side oriented adjacent the second side of the salient pole is transposed to form an outer layer of the first coil side, disposed on an outer aspect of the first coil side, away from the salient pole.

In some aspects, there is provided a method of making a coil wound from a conductor, wherein the method includes the steps of: winding the conductor on a former to form a coil comprising one or more layers, each layer comprising a multiplicity of turns of the conductor, the coil having a first coil side, a second coil side, and first and second coil ends connecting the first and second coil sides, each of the first and second coil sides having a predetermined cross-sectional profile and the first coil side having a longitudinal axis; removing the coil from the former; and rotating the first coil side around the longitudinal axis such that, when placed around a salient pole of the stator an inner layer of the second coil side disposed adjacent the salient pole is transposed to form an outer layer of the first coil side disposed on an outer aspect of the first coil side, away from the salient pole.

The second coil side may have a longitudinal axis and the coil may be wound on the former with a cross-sectional profile that is at an orientation of 90° to the predetermined cross-sectional profile, and the step of rotating the first coil side around the longitudinal axis is achieved by rotating the first and the second coil sides along their respective longitudinal axes such that, when placed around a salient pole of the stator an inner layer of the second coil side disposed adjacent the salient pole is transposed to form an outer layer of the first coil side disposed on an outer aspect of the first coil side, away from the salient pole.

Alternatively, the coil may be wound on the former with a cross-sectional profile that is at an orientation of 90° to the predetermined cross-sectional profile, and the step of rotating the first coil side around the longitudinal axis replaced with manipulating the coil with an initial lateral movement in which the coil sides are laterally displaced from each other, and then moving at least one of the first and second the coil sides in a direction orthogonal to the direction of the lateral displacement to bring the coils into a position such that when placed around a salient pole of the stator an inner layer of the second coil side disposed adjacent the salient pole is transposed to form an outer layer of the first coil side disposed on an outer aspect of the first coil side, away from the salient pole.

Specific embodiments are now described, by way of example only, with reference to the accompanying drawings of which:
Figure 1 shows a perspective view of a portion of a twisted rope conductor of the prior art for use in a stator winding for an electrical machine;
Figure 2 shows a partial cross-section of a typical stator for a switched reluctance machine;
Figures 3a and 3b are perspective schematic views of a multi-layer stator coil for an electrical machine;
Figure 4 is a schematic cross-section through a stator coil of Figures 3a and 3b;
Figure 5 is a partial cross-section of a stator with a stator coil mounted on a stator pole of the stator, the coil comprising three layers and eight turns per layer; and
Figures 6a and 6b schematically illustrate two methods of forming the disclosed coils.

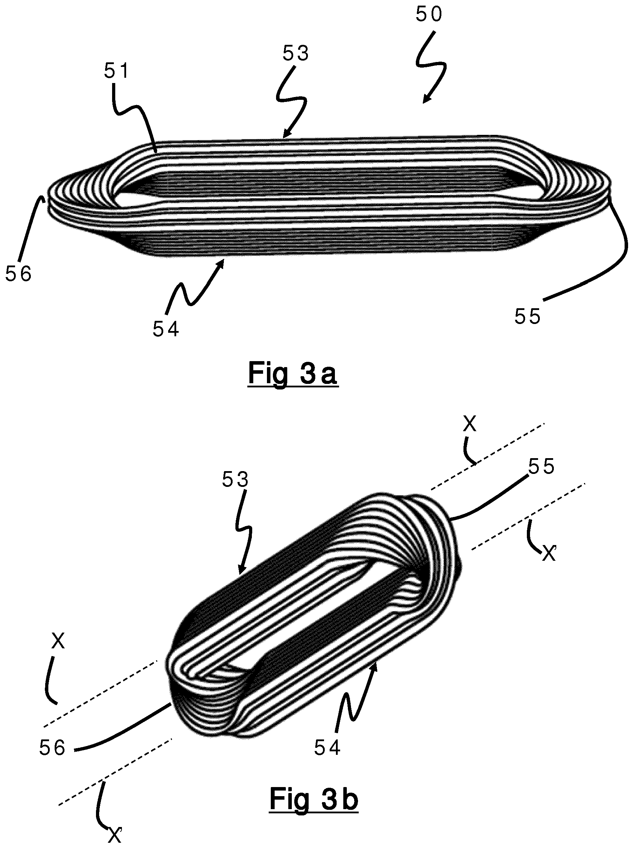

Figures 3a, 3b, and 4 to 6 show coils with different cross-sectional profiles but the same reference numerals are used to denote the same features of the coils throughout.

A coil 50 for a switched reluctance machine (not shown) is formed from a continuous conductor 51. The conductor 51 can comprise a single strand of copper wire or can comprise a twisted rope as described above. The coil 50 comprises a first coil side 53 and a second coil side 54 joined by first and second coil ends 55, 56. The coil 50 is configured to be placed around, and be mounted on, a salient pole 52 of a stator 57 of a switched reluctance machine (not shown). Each salient pole 52 of the stator 57 comprises first and second pole sides 62 which are parallel to each other.

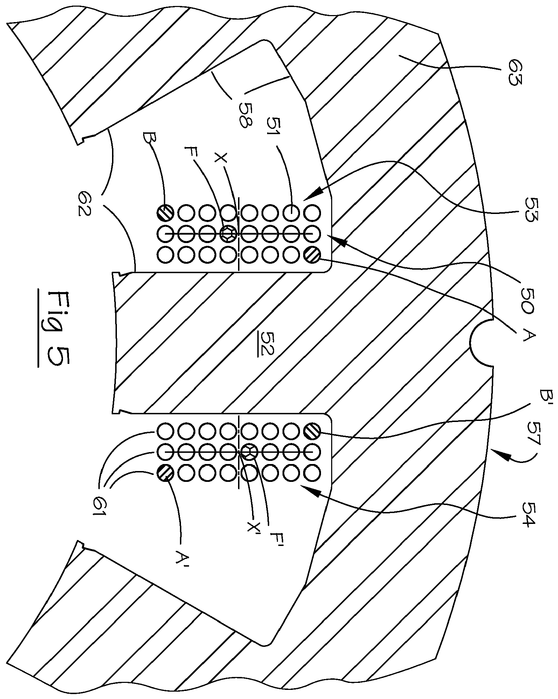

The coil 50 is of a multi-layered construction with each layer 61 comprising a plurality of turns. In the example in Figure 5, the coil 50 comprises three full layers 61, each layer 61 comprising eight turns of the conductor 50. The coil 50 can be considered to have a rectangular cross-sectional profile comprising 3 layers of eight turns/layers, giving twenty-four turns in total. In this embodiment, each layer 61 is complete.

The first and second coil sides 53, 54 have respective longitudinal axes X, X' extending the length of the coil sides 53, 54.

In some embodiments, the conductor 51 is first wound around a former (not shown) to form a coil with a number of layers 61, each layer 61 comprising a multiplicity of turns of the conductor 50. One of the coil sides 53, 54 is then rotated through 180°, around its respective longitudinal axis X, X', with respect to the other coil side 54, 53. The rotation can be applied in either a clockwise or counter-clockwise direction. This forms the coil 50 which is illustrated schematically in two views in Figure 3.

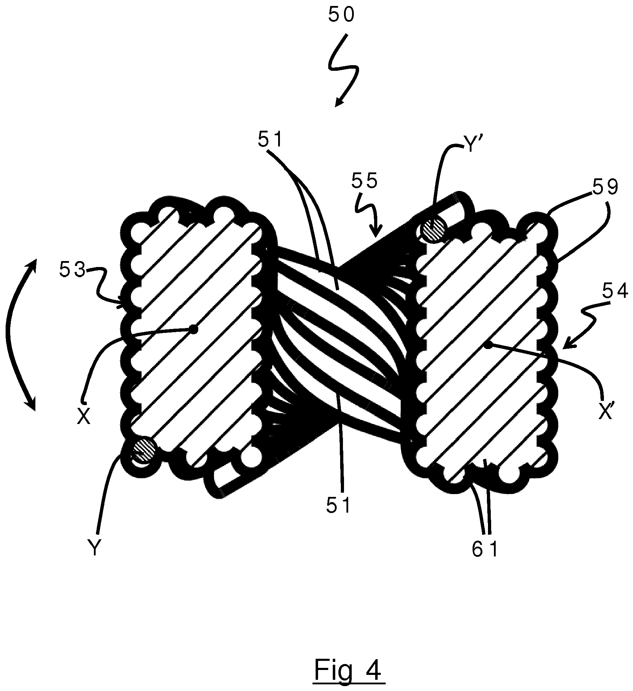

The rotation of the first or second coil side 53, 54 about its respective longitudinal axis X, X' changes the position of any turn relative to the pole side from one coil side to another, for example from an inner aspect of the one coil side to an outer aspect of the other coil side. Reference to known coils illustrated in Figure 2 shows that, for any coil, one coil side is a mirror of the other coil side about the centre line of the pole, so any turn in the coil takes up a mirror position in conventional coils. As will be apparent from the description below, there is no such mirror symmetry in the disclosed coils, such as that illustrated in Figure 3, as will now be discussed with reference to Figures 4 and 5.

Figure 4 is a schematic cross-section of the coil 50 and illustrates the way in which the conductor twists at the coil end 55. The curved arrow in Figure 4 indicates how the first coil side 53 is rotated about its longitudinal axis X with respect to the second coil side 54. In Figure 4, a turn of the conductor 51 is identified by the reference Y in the first coil side 53. The conductor 51 follows a path in which it twists around at the coil end 55 so that the turn of the conductor 51 that was positioned at Y in the first coil side 53 is located at position Y' in the second coil side 54. It can be seen that a portion of the turn in the second coil side 54 (at Y') is adjacent the space inside the coil that accepts a salient pole, while a portion of the turn in the first coil side 53 (at Y) is adjacent an opposed, outer face of the coil.

Figure 5 illustrates schematically a coil 50 mounted on a salient pole 52 of a stator 57 of an electrical machine, for example a switched reluctance machine. The salient pole 52 has a slot liner, which is not shown for the sake of clarity. The two coil sides 53, 54 are rotated 180° with respect to each other as discussed above. When the first coil side 53 is rotated around the longitudinal axis X with respect to the second coil side 54, and the coil is then placed around the salient pole 52 of the stator 57, an inner layer of the second coil side 53 oriented adjacent a second side of the salient pole is transposed to form an outer layer of the first coil side 53 which is displaced from the first side of the salient pole 52.

It will be understood that the transposition can vary depending upon which coil side 53, 54 is rotated and whether the rotation is clockwise or counter-clockwise. However, in any event an inner layer 61 of one coil side that is disposed adjacent one side 62 of the salient pole 52 is transposed to form an outer layer 61 of the other coil side, which is spaced away from the other side 62 of the salient pole 52. Thus, the position of a turn of the conductor 51 in an inner layer 61 of the first coil side 53 (indicated at A in Figure 5) adjacent to the stator surface 58 translates to a position in an outer layer 61 of the second coil side, spaced away from the stator surface 58 (as indicated at point A' in Figure 5).

Similarly, the position of the turn of the conductor 51 in the second coil side 54 indicated at B' in Figure 5, adjacent the stator surface 58, translates in the first coil side 53 to a position distant the stator surface 58 at B in Figure 5. All the turns have moved their position as they transition from one coil side to the other - e.g. turn F is now in position F'. As can be seen from Figure 5, those portions of the conductor 51 that are located internally of the coil 50, such as those indicated at F' and F do not change their position within the coil relative to the stator surface as significantly. In Figure 5, the positions of the conductor 51 at F' and F are the same displacement from the salient pole 52 but are disposed slightly nearer and further away from the surface of the back-iron 63.

The change of position of each turn takes place in the respective coil ends 55, 56 and there is no change in position of any turn within in the respective coil side 53, 54. Thus any turn in one of the first or second coil sides 53, 54 remains in substantially the same position within each coil side with respect to the stator surface 58 whilst running along the respective side 62 of the salient pole.

The rotation of one coil side 53, 54 with respect to the other has the effect of changing the position of the conductor 51 at different points within the coil 50. The conductor 51 follows a path which takes it through different positions within the coil cross section, changing the separation, or distance, of portions of the conductor 51 from the stator surface 58 along the length of the conductor 51. Specifically, turns of the conductor may have a portion (for example at A or B') adjacent the stator surface 58 and a portion spaced away from the stator surface 58 (for example at A' or B). Thus, heat from a spaced away portion of the conductor can be dissipated into the stator through an adjacent portion close to the stator surface 58, for example an adjacent portion of the same turn. As a result, heat may be conducted to the stator 57 more easily.

In other words, as the conductor 51 is continuous, the section of the conductor 51 at A' is thermally coupled to the section of the conductor 51 at A. The section at A is oriented so that it is adjacent to or in close proximity to the inner stator surface and therefore more easily able to conduct heat to the stator 57 than the section at A'. Thus heat from the section at A' can dissipate via the section of the conductor 51 at A to the stator 57. The rotation of the conductor 51 in the first coil side 53 relative to the second coil side 54 (around axis X) provides a thermal conduction path with reduced thermal impedance, which enables more efficient transfer of heat into the stator 57 from the coil. In some embodiments, when the coil is placed around the respective salient pole 52, the average distance of every turn from the inner stator surface 58 is constant. As a result, the average thermal dissipation path is substantially the same for each turn of the conductor 51 and the temperature differential described for the prior art is virtually eliminated.

The relative rotation of 180° between the first and second coil sides 53, 54 can be achieved in a number of different ways. As described above, the coil can be wound in layers on a coil former which essentially has the same dimensions as the pole 52, one coil side is rotated 180° relative to the other to form the coil, and the coil then placed on the pole, with the pole effectively replacing the coil former. In these embodiments, the layers of the arrangement of turns in the final coil correspond to sequential (i.e. adjacent in an axial direction) turns of the coil on the former.

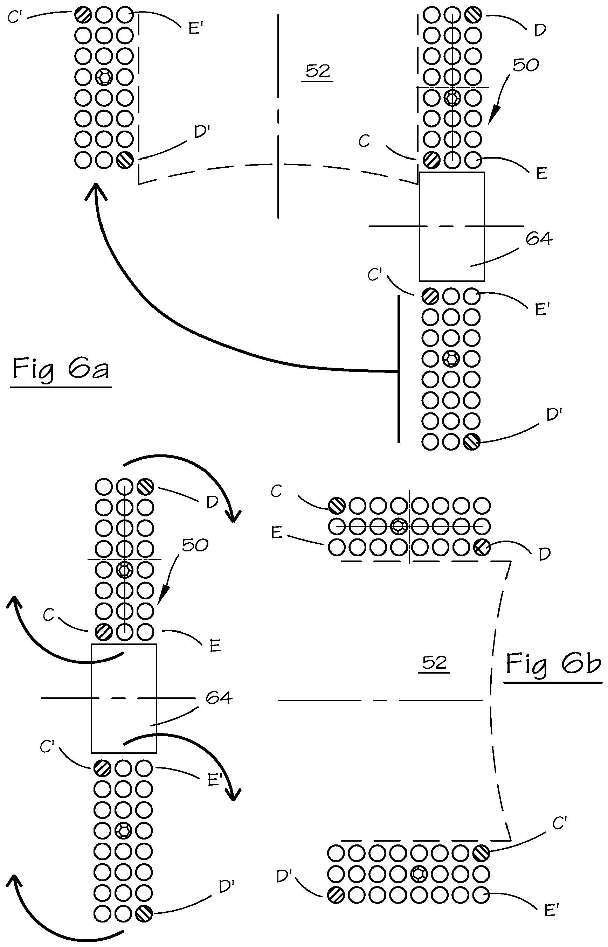

Other methods are schematically illustrated in Figures 6a and 6b, as will now be described.

In both examples, the coil 50 is wound on the former 64 at 90° to the required coil profile for the pole 52. In other words, the layers of the final coil are now formed by corresponding turns in the layers on the former, for example turns in the same axial position on the former. So, for example, using the 8x3 profile of the coil illustrated in Figures 4 and 5, rather than winding the coil on the former 64 in that 8x3 profile, the coil 50 can be wound on the former with a 3x8 profile. Figures 6a and 6b show the coil 50 being wound with that alternative profile. One or both coil sides are manipulated so that corresponding turns in adjacent layers on the former become adjacent along an axial direction in the final coil. Thus, in these embodiments, the layers of the arrangement of turns in the final coil correspond to corresponding turns in the layers on the former. In Figures 6a and 6b, positions of some turns in the coil 50 are indicated by references C, C'; D, D'; and E, E'. Thus, C and C' are the same turn, D and D' the same turn and so on.

In Figure 6a, the coil 50 can be formed by translating one side, for example through an L-shaped 90° movement, as indicated by the arrow to bring the coil sides into a facing alignment again. For example, the coil 50 is manipulated with a lateral movement, in which the coil sides 53, 54 are laterally displaced from each other, and then the coil side is moved in a direction orthogonal to the direction of the lateral displacement to bring the coils sides 53, 54 into a position facing each other. The coil 50 can then be mounted on a salient pole 52 (indicated by dashed lines in Figures 6a).

In another embodiment, illustrated schematically in Figure 6b, the coil 50 is manipulated by rotating both coil sides 53, 54 through 90° in the same angular direction around their respective longitudinal axes X, X', to achieve the same 180° relative orientation. This manipulation is done when the coil 50 is taken off the former 64. As the rotation is done, there may also be some lateral manipulation so that the coil sides 53, 54 are opposing each other for fitting around the salient pole 52.

In both these coil manipulations shown in Figure 6, a coil is produced with a 180° relative rotational orientation between the first and second coil sides 53, 54, as described above.

The present disclosure includes the following embodiments:
1. A coil for an electrical machine having a stator with salient poles, the salient poles having first and second pole sides, the coil being wound from a continuous conductor and comprising one or more layers, each layer comprising a multiplicity of turns of the conductor, the coil having a first coil side, a second coil side, and first and second coil ends connecting the first and second coil sides, the first coil side having a longitudinal axis, wherein the first coil side is rotated around the longitudinal axis with respect to the second coil side such that, when placed around a salient pole of the stator, an inner layer of one of the first and second coil sides disposed adjacent the salient pole is transposed to form an outer layer of the other of the first and second coil sides, disposed on an outer aspect of the other of the first and second coil sides, away from the salient pole.
2. A coil for an electrical machine according to item 1, wherein the first coil side is rotated through an angle of between 160° and 200°.
3. A coil for an electrical machine according to item 1 or item 2, wherein the longitudinal axis extends centrally through the first coil side.
4. A coil for an electrical machine according to any one of items 1 to 3, wherein the continuous conductor is a twisted bundle or rope of wires.
5. A method of making a coil wound from a conductor, wherein the method includes the steps of: winding the conductor on a former to form a coil comprising one or more layers, each layer comprising a multiplicity of turns of the conductor, the coil having a first coil side, a second coil side, and first and second coil ends connecting the first and second coil sides, with a predetermined cross-sectional profile, and the first coil side having a longitudinal axis; removing the coil from the former and rotating the first coil side around the longitudinal axis such that, when placed around a salient pole of the stator an inner layer of one of the first and second coil sides disposed adjacent the salient pole is transposed to form an outer layer of the other of the first and second coil side, disposed on an outer aspect of the other of the first and second coil side, away from the salient pole.
6. A method according to item 5, wherein the first coil side is rotated through an angle of between 160° and 200°.
7. A method according to item 5 or item 6, wherein the longitudinal axis extends centrally through the first coil side.
8. A method according to item 5, wherein the second coil side has a longitudinal axis and wherein the coil is wound on the former with a cross-sectional profile that is at an orientation of 90° to the predetermined cross-sectional profile, and the step of rotating the first coil side around the longitudinal axis is achieved by rotating the first and the second coil sides along their respective longitudinal axes such that, when placed around a salient pole of the stator an inner layer of one of the first and second coil sides oriented adjacent the second side of the salient pole, is transposed to form an outer layer of the other of the first and second coil side, disposed on an outer aspect of the other of the first and second coil sides, away from the salient pole.
9. A method according to item 8, wherein the rotation of each of the first and second coil sides around their respective longitudinal axes is at an angle of between 80° and 100°.
10. A method according to item 5, wherein the coil is wound on the former with a cross-sectional profile that is at an orientation of 90° to the predetermined cross-sectional profile, and instead of rotating the first coil side around the longitudinal axis, manipulating the coil with an initial lateral movement in which the coil sides are laterally displaced from each other, and then moving at least one of the first and second the coil sides in a direction orthogonal to the direction of the lateral displacement to bring the coils into a position such that, when placed around a salient pole of the stator an inner layer of one of the first and second coil sides oriented adjacent the salient pole, is transposed to form an outer layer of the other of the first and second coil side, disposed on an outer aspect of the other of the first and second coil sides, away from the salient pole.

The skilled person will appreciate that variation of the disclosed arrangements are possible without departing from the invention, particularly in the details of the shape of the coil and the bending tool. For example, Figures 3a and 3b and Figure 4 schematically illustrate a six-layer coil 51 with eight turns per layer. This profile is illustrative only and a skilled person would understand that other profiles and number of turns can be formed depending upon requirements. Accordingly, the above description of several embodiments is made by way of example and not for the purposes of limitation. It will be clear to the skilled person that minor modifications can be made to the coil design and method of production described above. The present invention is intended to be limited only by the scope of the following claims.

## Claims

1. A coil for an electrical machine having a stator with salient poles, the coil having first and second coil sides joined by a respective coil end at each end to define a space for accepting a salient pole, each coil side having an inner side facing the space and an opposed outer side, wherein the coil comprises a plurality of turns of a conductor arranged in layers of turns with a first layer disposed on the inner side of the first coil side and the outer side of the second coil side and a second layer disposed on the inner side of the second coil side and the outer side of the first coil side.

2. A coil according to claim 1, wherein an arrangement of the plurality of turns in the first side is rotated about an axis along the first coil side and relative to an arrangement of the plurality of turns in the second side.

3. A coil according to claim 2, wherein an arrangement of the plurality of turns in the first side is rotated about the axis and relative to the arrangement of the plurality of turns in the second side by an angle between 160 and 200 degrees.

4. A coil according to claim 2 or claim 3, wherein the axis is centred on the first coil side.

5. A coil according to any preceding claim, wherein the conductor is one or more of a wire, a bundle of wires, a twisted bundle of wires, a rope of wires or a braid of wires.

6. A coil according to any preceding claim, wherein a respective distance between each turn and the space is substantially constant over a portion of each coil side.

7. A coil according to any preceding claim, wherein an average distance from the space along each turn is substantially constant across the plurality of turns.

8. An electrical machine having a stator with salient poles and one or more coils according to any preceding claim disposed around respective ones of the salient poles.

9. A method of forming a coil, the method comprising winding the conductor on a former to form a coil having first and second coil sides joined at each end by a respective coil end, removing the coil from the former and moving the first coil side relative to the second coil side to form a coil according to any one of claims 1 to 7.

10. A method according to claim 9, wherein the turns of the first and second layer of the formed coil are sequential turns on the former.

11. A method according to claim 10, wherein the first coil side is rotated through an angle relative to the second coil side about an axis along the first coil side.

12. A method as claimed in claim 11, where the angle is between 160 and 200 degrees.

13. A method according to claim 12, wherein the turns of the first and second layer of the formed coil are corresponding turns in the layers on the former.

14. A method according to claim 13, wherein each coil side is rotated through an angle relative to the other about an axis along a respective one of the coil sides.

15. A method as claimed in claim 14, where the angle is between 80 and 100 degrees.

16. A method according to claim 15, wherein the first coil side is translated relative to the second coil side so that the first and second coil sides face each other.
